# EUROPEAN PATENT APPLICATION

(11) **EP 3 273 323 A1**
(43) Date of publication of application: **24.01.2018**
(21) Application number: 17152152.9
(22) Date of filing: 19.01.2017
(51) Int. Cl.: G06F 1/20

(54) **COMPUTER LIQUID COOLING SYSTEM AND METHOD OF USE**

(30) Priority: 22.07.2016 US 201615216851
(71) Applicant: EKWB d.o.o., 1218 Komenda (SI)
(72) Inventor: TIVADAR, Niko, 9250 Gornja Radgona (SI)
(74) Representative: Schaumburg und Partner Patentanwälte mbB

(57) **Abstract**

A computer includes a heat source; and a cooling system secured to the heat source and configured to remove heat from the heat source during use. The cooling system includes a cooling head secured to the heat source; and a radiator in fluid communication with the cooling head.

## Description

### BACKGROUND

### 1. Field of the Invention

The present invention relates generally to cooling systems, and more specifically, to a cooling system adapted for use with a computer processing unit.

### 2. Description of Related Art

Computer cooling systems for the computer processor unit (CPU) are well known in the art. A common problem associated with the conventional cooling systems is that the radiator and the cooling plate are fixedly attached to each other and the pump within the chassis vibrates the unit, which in turn creates undesired noise.

Accordingly, although great strides have been made in the area of computer cooling systems for CPUs, many shortcomings remain.

### DESCRIPTION OF THE DRAWINGS

The novel features believed characteristic of the embodiments of the present application are set forth in the appended claims. However, the embodiments themselves, as well as a preferred mode of use, and further objectives and advantages thereof, will best be understood by reference to the following detailed description when read in conjunction with the accompanying drawings, wherein:
FIGS. 1 and 2 are oblique views of a computer cooling system in accordance with a preferred embodiment of the present application;
FIGS. 3 and 4 are partial oblique views of the system of FIG. 1;
FIG. 5 is an oblique view of the system of FIG. 1;
FIG. 6 is an exploded view of the system of FIG. 1; and
FIG. 7 is a computer utilizing the system of FIG. 1.

While the system and method of use of the present application is susceptible to various modifications and alternative forms, specific embodiments thereof have been shown by way of example in the drawings and are herein described in detail. It should be understood, however, that the description herein of specific embodiments is not intended to limit the invention to the particular embodiment disclosed, but on the contrary, the intention is to cover all modifications, equivalents, and alternatives falling within the spirit and scope of the present application as defined by the appended claims.

### DETAILED DESCRIPTION OF THE PREFERRED EMBODIMENT

Illustrative embodiments of the system and method of use of the present application are provided below. It will of course be appreciated that in the development of any actual embodiment, numerous implementation-specific decisions will be made to achieve the developer's specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

The system and method of use will be understood, both as to its structure and operation, from the accompanying drawings, taken in conjunction with the accompanying description. Several embodiments of the system are presented herein. It should be understood that various components, parts, and features of the different embodiments may be combined together and/or interchanged with one another, all of which are within the scope of the present application, even though not all variations and particular embodiments are shown in the drawings. It should also be understood that the mixing and matching of features, elements, and/or functions between various embodiments is expressly contemplated herein so that one of ordinary skill in the art would appreciate from this disclosure that the features, elements, and/or functions of one embodiment may be incorporated into another embodiment as appropriate, unless described otherwise.

The preferred embodiment herein described is not intended to be exhaustive or to limit the invention to the precise form disclosed. It is chosen and described to explain the principles of the invention and its application and practical use to enable others skilled in the art to follow its teachings.

It should be understood that a Personal Computer liquid-cooling system works a lot like the cooling system of a car. Both take advantage of a basic principle of thermodynamics - heat moves from warmer objects to cooler objects.

Modern age CPU processors are dissipating twice as much heat as they were five years ago, which is even more true for the GPU processors. Today, most powerful dual-processor graphics card can dissipate as much as 380 watts of heat. Heat flux from these chips easily exceeds that of a nuclear reactor.

With the latest trends of using multiple processors and graphics cards in modern Gaming PCs and Professional Workstations it has become a challenge to ensure the best possible performance and silent operation.

Liquid cooling is the best solution for efficient heat removal due to the unmatched thermal performance. Liquid is the only way to successfully remove heat from the critical spots in modern day computer with zero noise pollution.

EKWB Water blocks offer lower profile cooling solution thus allowing double compute power in the same cubic footprint. At the same time this further increases both the overclocking potential of computer component as well as lifespan.

Liquid cooling system comprises of electric pump, heat dissipating radiator, at least one liquid cooling cold head (water block) that is attached to heat source in a computer, all connected together by liquid carrying tubes. The present invention relates to how this liquid cooling system is assembled together.

The electric pump is attached to the radiator by fixed attachment this way creating a solid non-movable unit. This pump-radiator unit is then attached to the main housing by soft, compressible de-couplers which absorbs most of the vibrations from the pump thus limiting the transmission of those to the computer chassis through unit housing. De-couplers are the only parts connecting the pump-radiator unit to main housing thus softly embedding the unit and allowing it to move within the housing without creating any movement or vibration on the exterior.

Some of the unique features of the present invention includes: significantly quieter operation since there is less vibration that can generate noise; increased life span of the electric pump due to less kinetic stress on the motor; reduction of the mechanical fatigue in all joints of the liquid cooling device (vibration induced). These features are achieved with one or more of the components discussed below and as shown in the accompany drawings.

The cooling system of the present application includes one or more of: a Water block - The cold head which absorbs the heat from the heat source and transfers it into the coolant flowing through the cooling surface; a Radiator - The unit that dissipates all the absorbed heat into the environment and thus cooling the cooling liquid for the next cycle. Radiator can be equipped with cooling fan to promote much more effective active cooling of the liquid coolant; a Reservoir - An expansion vessel which prevents liquid cooling device bursting from over-pressure; an Electric Pump - Pump the circulation of coolant in a liquid cooling loop thus allowing for rapid and effective heat transfer throughout the entire loop; an Unit Housing - holding the pump-radiator unit together with reservoir, allowing those parts to be attached to computer chassis; and a Soft Compressible de-couplers - rubber parts designed to fit between the housing and pump-radiator unit as a vibration separator. These components allow the computer to achieve the desired results discussed above.

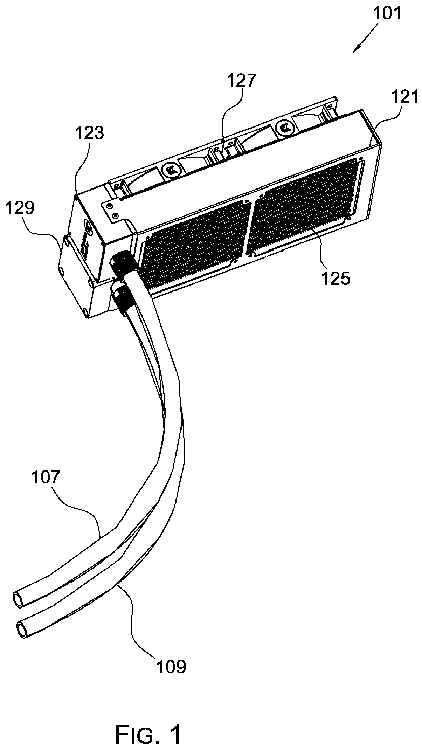

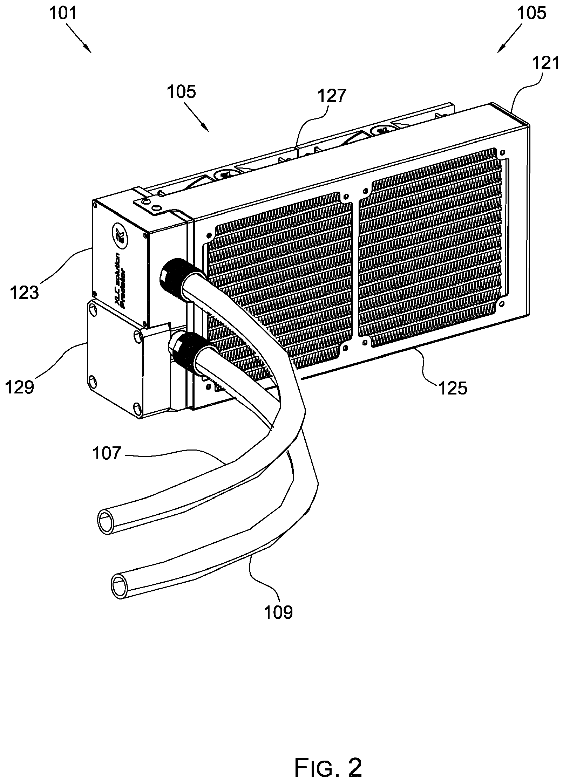

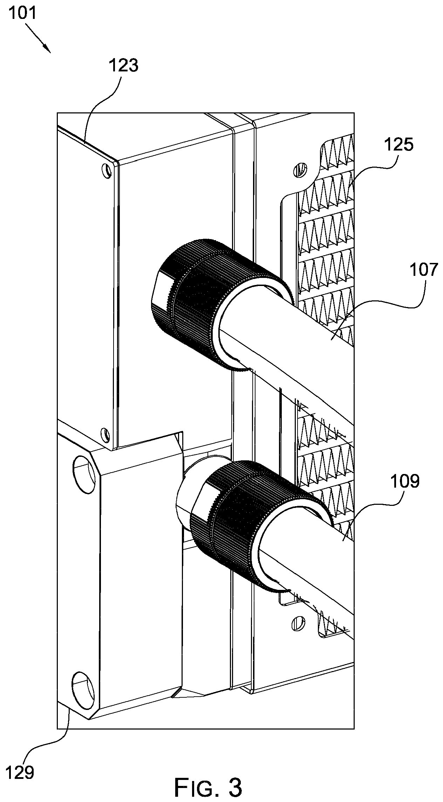

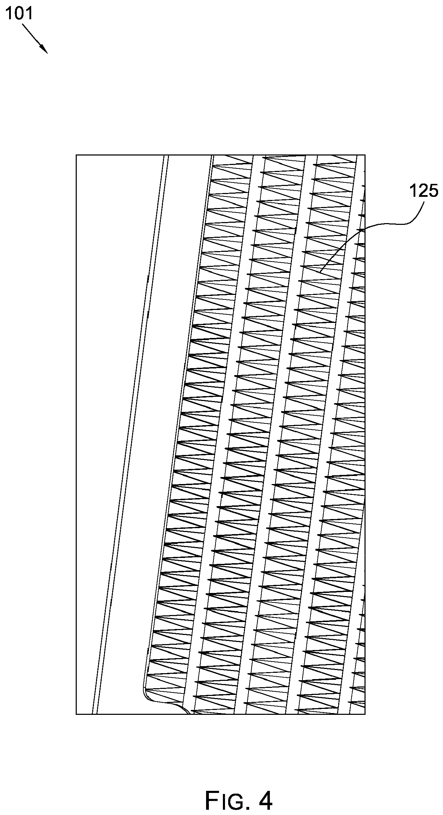

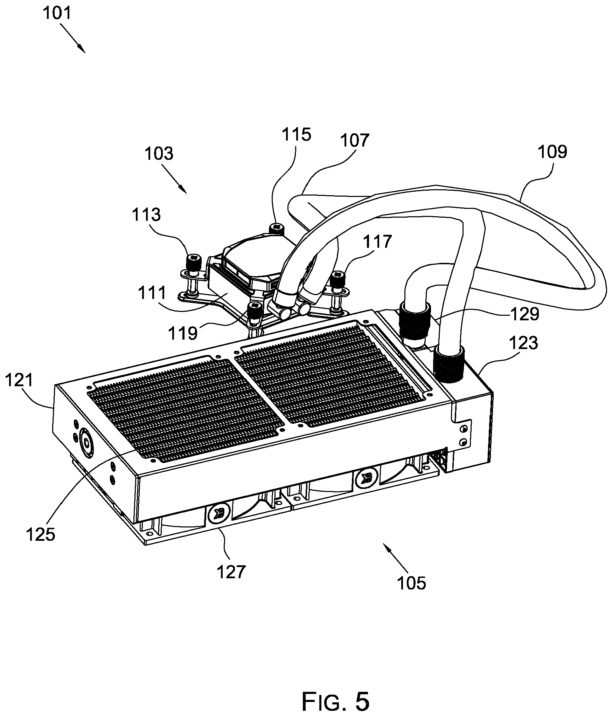

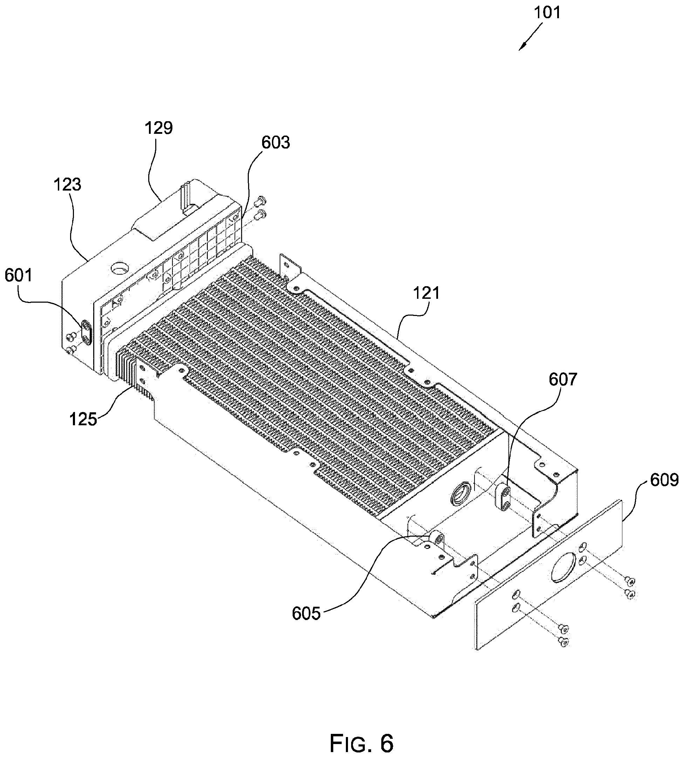

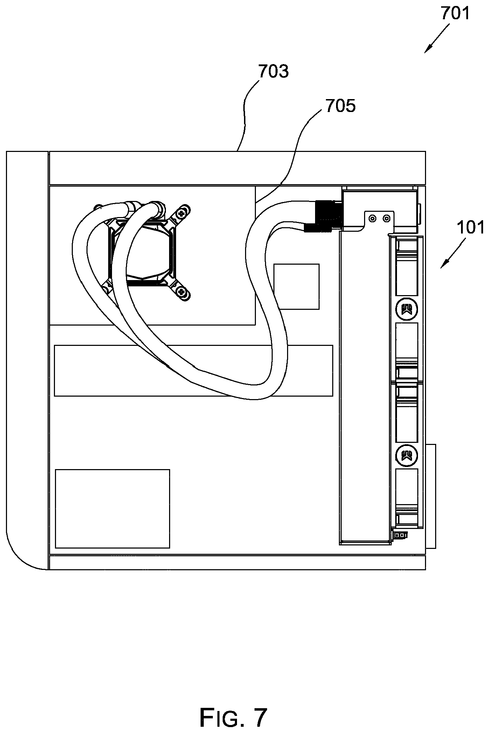

Referring specifically to the drawings, FIGS. 1-7 depict various views of a computer 701 utilizing the cooling system 101 in accordance with a preferred embodiment of the present invention. It will be appreciated that cooling system 101 provides the features discussed above.

In the contemplated embodiment, cooling system 101 is operably associated with cooling a heat source 705 disposed within a desktop assembly 703. It will be appreciated that the heat source 705 could be computer components that create heat while the user is operating the computer 701. During use, the system 101 is configured to cool down the heat source 705, thereby preventing overheating issues and possible damage.

System 101 preferably includes one or more of a liquid cooling head 103 configured to securely engage with the heat source 705 and in fluid communication with a radiator assembly 105 via hoses 107, 109. A pump 123 is secured to a housing 121 of the assembly 105 and is configured to direct fluid to and from the head 103. Accordingly, hose 107 can be considered an input hose, while hose 109 can be considered an outlet hose.

The head 103 preferably includes a housing 111 in direct communication with the heat source and configured to engage with the heat source via one or more fasteners 113, 115, 117, and 119 configured to threadedly engage with the heat source during assembly.

The radiator assembly 105 includes a radiator core 125 secured to housing 121 and configured to dissipate heat from the fluid channeled through the hose 107. In the contemplated embodiment, the core 125 includes a plurality of fluidly sealed channels configured to direct the fluid over one or more fans 127. The system 101 is further optionally provided with a fluid reservoir 129 adapted to receive excessive fluid from circulation to prevent bursting.

During use, the fluid carried within the system 101 is channeled to head 103 to receive the heat from the heat source, then is directed to the radiator core 125 via the pump 123 and thereafter cooled via a plurality of fans 127. This process effectively extracts heat from the heat source via fluid passing through the system.

Another point of novelty of system 101 is the use of a plurality of shock absorbing de-couplers 601, 603, 605, and 607 secured to the housing 121, core 125 and pump 123. The de-couplers are removably attached to the components of system 101 and are configured to reduce, if not remove, all vibrations of system 101 during use. This feature enables the extraction of heat from the heat source via the cooling system 101 without additional sound or vibration. A detachable plate 609 is secure to the housing via a plurality of fasteners and provides access to the radiator core for ease of maintenance and assembly.

The particular embodiments disclosed above are illustrative only, as the embodiments may be modified and practiced in different but equivalent manners apparent to those skilled in the art having the benefit of the teachings herein. It is therefore evident that the particular embodiments disclosed above may be altered or modified, and all such variations are considered within the scope and spirit of the application. Accordingly, the protection sought herein is as set forth in the description. Although the present embodiments are shown above, they are not limited to just these embodiments, but are amenable to various changes and modifications without departing from the spirit thereof.

## Claims

1. A computer, comprising:
a heat source;
a cooling system secured to the heat source and configured to remove heat from the heat source during use, the cooling system having:
a cooling head secured to the heat source; and
a radiator in fluid communication with the cooling head;
wherein fluid from the cooling head is circulated from the cooling head to the radiator; and
wherein heat from the heat source warms fluid circulating the cooling head, which in turn is dissipated via the radiator.

2. The computer of claim 1, the cooling system further comprising:
an inlet hose; and
an outlet hose;
wherein the inlet hose and the outlet hose provide fluid passage between the cooling head and the radiator.

3. The computer of claim 2, further comprising:
a pump secured to a housing of the radiator and in fluid communication with both the inlet hose and the outlet hose;
wherein the pump is configured to channel fluid between the cooling head and the radiator via the inlet hose and the outlet hose.

4. The computer of claim 3, the radiator comprising:
a radiator core in fluid communication with the pump;
wherein the radiator core is configured to channel fluid from the inlet hose to the outlet hose.

5. The computer of claim 4, further comprising:
a plurality of fans in gaseous communication with the radiator core;
wherein the plurality of fans is configured to direct air through the radiator core.

6. The computer of claim 4, further comprising:
a plurality of shock-absorbent de-couplers configured to secure the radiator core to the radiator housing.

7. The computer of claim 4, further comprising:
a fluid reservoir in fluid communication with the outlet hose;
wherein the fluid reservoir collects and store excess fluid.

8. A cooling system for a heat source of a computer, comprising:
a cooling head secured to the heat source; and
a radiator in fluid communication with the cooling head;
wherein fluid from the cooling head is circulated from the cooling head to the radiator; and
wherein heat from the heat source warms fluid circulating the cooling head, which in turn is disapated via the radiator.

9. The system of claim 8, further comprising:
an inlet hose; and
an outlet hose;
wherein the inlet hose and the outlet hose provide fluid passage between the cooling head and the radiator.

10. The system of claim 9, further comprising:
a pump secured to a housing of the radiator and in fluid communication with both the inlet hose and the outlet hose;
wherein the pump is configured to channel fluid between the cooling head and the radiator via the inlet hose and the outlet hose.

11. The system of claim 10, the radiator comprising:
a radiator core in fluid communication with the pump;
wherein the radiator core is configured to channel fluid from the inlet hose to the outlet hose.

12. The system of claim 11, further comprising:
a plurality of fans in gaseous communication with the radiator core;
wherein the plurality of fans is configured to direct air through the radiator core.

13. The system of claim 11, further comprising:
a plurality of shock-absorbent de-couplers configured to secure the radiator core to the radiator housing.

14. The system of claim 11, further comprising:
a fluid reservoir in fluid communication with the outlet hose;
wherein the fluid reservoir collects and store excess fluid.
